# EUROPÄISCHE PATENTSCHRIFT

(11) **EP 1 186 576 B1**
(45) Veröffentlichungstag und Bekanntmachung des Hinweises auf die Patenterteilung: **03.01.2007**
(21) Anmeldenummer: 01121527.4
(22) Anmeldetag: 08.09.2001
(51) Int. Cl.: C03B 23/047, C03B 23/045, C03B 37/012, C03B 23/049, B28D 1/14

(54) **Verfahren zur Herstellung eines Quarzglasrohres und Bohrkörper zur Durchführung des Verfahrens**
Process of manufacturing a quartz glass tube and drill for carrying out the process
Procédé de fabrication d'un tube en verre de silice et outil de perforage pour la mise en oeuvre du procédé

(30) Priorität: 08.09.2000 DE 10044715
(43) Veröffentlichungstag der Anmeldung: 13.03.2002
(73) Patentinhaber: Heraeus Quarzglas GmbH & Co. KG, 63450 Hanau (DE)
(72) Erfinder: Knieling, Dagobert, 63450 Hanau (DE); Schleich, Rainer, 63452 Hanau (DE)
(74) Vertreter: Staudt, Armin Walter

(56) Entgegenhaltungen:
- EP-A- 0 598 349
- DE-A- 2 606 846
- DE-A- 2 646 128
- DE-B- 2 147 349
- DE-U- 29 616 981
- FR-A- 1 267 805
- US-A- 3 620 707
- US-A- 4 483 108
- PATENT ABSTRACTS OF JAPAN vol. 016, no. 040 (C-0906), 31. Januar 1992 (1992-01-31) -& JP 03 247525 A (NIPPON SEKIEI GLASS KK;OTHERS: 01), 5. November 1991 (1991-11-05)

## Beschreibung

Die vorliegende Erfindung betrifft ein Verfahren für die Herstellung eines Quarzglasrohres, indem ein um eine Rotationsachse rotierender Zylinder aus Quarzglas kontinuierlich einer Heizzone zugeführt, darin von einem Ende beginnend bereichsweise erweicht und der erweichte Bereich über einen Bohrkopf eines koaxial zur Rotationsachse angeordneten Bohrkörpers abgezogen und dabei zu dem Quarzglasrohr umgeformt wird.

Weiterhin betrifft die Erfindung einen Bohrkörper zum Umformen eines Zylinders aus Quarzglas in ein Quarzglasrohr, mit einem in den umzuformenden Zylinder eindringenden Bohrkopf, der von einem Bohrerschaft gehalten wird.

Ein Verfahren und einer Vorrichtung dieser Gattung sind in der JP-A 3-247525 und EP-A-0 598 349 beschrieben. Bei dem darin beschriebenen Verfahren wird ein Quarzglas-Vollzylinder in einen Quarzglas-Hohlzylinder umgeformt, indem der Quarzglas-Vollzylinder unter Rotation in seine Längsachse von einem Ende beginnend kontinuierlich einem Ofen zugeführt, darin zonenweise erweicht und der erweichte Bereich gegen einen in der Rotationsachse angeordneten feststehenden Bohrkörper gedrückt und darüber gezogen wird. Der Bohrkörper weist einen kegelförmig geformten Bohrkopf auf, der an einem langen Schaft gehalten wird.

Während des Umformprozesses wirken auf den Bohrkopf hohe Kräfte ein. Die rotierende Glasmasse des Quarzglas-Vollzylinders kann einseitig auf den Bohrkopf einwirkende Haftreibungskräfte erzeugen, die den Bohrkopf seitlich aus der Rotationsachse auslenken. Darüber hinaus kann sich der Bohrschaft aufgrund seiner Länge leicht durchbiegen und dadurch den Bohrkopf aus der Waagerechten kippen, so dass der obere Teil der Bohrkopfstirnfläche nicht mehr in Eingriff zum Quarzglas ist. Aufgrund dieser Effekte kommt es bei dem bekannten Verfahren zu einer unzureichenden Geradheit der Bohrung und Maßhaltigkeit des Bohrungsdurchmessers. Durch eine einseitig am Bohrkopf anliegende Glasmasse werden radiale Rillen in der Bohrungsoberfläche erzeugt.

Der Erfindung liegt daher die Aufgabe zugrunde, ein Verfahren zum Umformen eines Quarzglas-Zylinders in einen Quarzglas-Hohlzylinder mit möglichst defektfreier, gerader und maßhaltiger Innenbohrung anzugeben und einen Bohrkörper dafür bereitzustellen.

Diese Aufgabe wird durch das in Anspruch 1 definierte Verfahren und den in Anspruch 4 definierten Bohrkörper gelöst.

Bei dem erfindungsgemäßen Verfahren wird ein Bohrkopf verwendet, der eine Kontaktfläche mit konvexer Krümmung aufweist. Während des Umformprozesses ist die Kontaktfläche stets im flächigen Eingriff mit der erweichten Glasmasse des umzuformenden Zylinders. Hierzu weist die Kontaktfläche eine konvexe Krümmung auf. Das hat zur Folge, dass auch bei einer Auslenkung des Bohrkopfes - zum Beispiel aufgrund einer Durchbiegung der Bohrstange, an der der Bohrkopf gehalten wird - der flächige Kontakt mit der erweichten Glasmasse aufrechterhalten wird. Dadurch wird gewährleistet, dass am Umfang des Bohrkopfes stets etwa gleich große Reibungskräfte rotationssymmetrisch um die Rotationsachse wirken, so dass die Ausbildung einseitig wirkender Haftreibungskräfte, die den Bohrkopf noch weiter auslenken könnten, vermieden wird. Aufgrund des kontinuierlichen, flächigen Kontakt wird das in der Innenbohrung des Quarzglasrohrs verdrängte Quarzglas an der Randzone der konvexen Kontaktfläche glatt abgeformt und hinterläßt keine Defekte in der Bohrungsoberfläche. Rillen werden dadurch vermieden. Wesentlich ist, dass die Kontaktfläche eine symmetrisch zur Rotationsachse verlaufende, konvexe Krümmung aufweist. Im Idealfall ist die Krümmung kugelförmig, das heißt, sie bildet eine Teil einer Kugeloberfläche. Abweichungen von der Kugelform in Richtung der Oberfläche eines Ellipsoids oder Paraboloids sind nicht ausgeschlossen. Desweiteren ist die Kontaktfläche mit Vertiefungen versehen. Durch die Vertiefungen können im erweichten Quarzglas eingeschlossene oder während des Umformprozesses sich bildende Gase abgeführt oder zumindest gleichmäßiger verteilt werden.

Der umzuformende Zylinder ist üblicherweise ein Vollzylinder. Das erfindungsgemäße Verfahren ist aber auch zur Erweiterung der Innenbohrung eines Hohlzylinder geeignet.

Vorzugsweise wird ein Bohrkopf mit kugelförmig ausgebildeter Kontaktfläche eingesetzt. Die kugelförmige Kontaktfläche bleibt bei Auslenkung des Bohrkopfes aus der Rotationsachse unabhängig von der Richtung der Auslenkung stets vollflächig im Eingriff mit der erweichten Quarzglasmasse, so dass stets rotationssymmetrisch gleich große Reibungskräfte am Umfang des Bohrkopfes wirken und das in der Innenbohrung verdrängte Quarzglas an der Randzone der Kugel glatt abgeformt wird.

Vorzugsweise sind konzentrisch zur Rotationsachse verlaufende Vertiefungen am Bohrkopf vorgesehen. Diese bieten eine Entspannungsmöglichkeit für Gase und ermöglichen eine gleichmäßige Verteilung der Gase um den Umfang des Bohrkopfes. Dadurch wird vermieden, dass der Bohrkopf unter Verlust des angestrebten vollflächigen Kontakts mit der Glasmasse aufgrund von Gasblasen im erweichten Quarzglas partiell "aufschwimmt". Aufgrund der gleichmäßigen Verteilung der Gase werden die um den Umfang des Bohrkopfes gleichmäßig verteilten Haftreibungskräfte aufrechterhalten, so dass die Geradheit der Bohrung und die Maßhaltigkeit des Bohrungsdurchmessers gewährleistet wird.

Der erfindungsgemäße Bohrkörper weist eine Kontaktfläche mit konvexer Krümmung auf. Dadurch ist die Kontaktfläche während des Umformprozesses stets im flächigen Eingriff mit der erweichten Glasmasse des umzuformenden Zylinders. Das hat zur Folge, dass auch bei einer Auslenkung des Bohrkopfes - zum Beispiel aufgrund einer Durchbiegung der Bohrstange, an der der Bohrkopf gehalten wird - der flächige Kontakt mit der erweichten Glasmasse aufrechterhalten wird. Dadurch wird gewährleistet, dass am Umfang des Bohrkopfes stets etwa gleich große Reibungskräfte rotationssymmetrisch um die Rotationsachse wirken, so dass die Ausbildung einseitig wirkender Haftreibungskräfte, die den Bohrkopf noch weiter auslenken könnten, vermieden wird. Aufgrund des kontinuierlichen, flächigen Kontakt wird das in der Innenbohrung des Quarzglasrohrs verdrängte Quarzglas an der Randzone der konvexen Kontaktfläche glatt abgeformt und hinterläßt keine Defekte in der Bohrungsoberfläche. Rillen werden dadurch vermieden. Wesentlich ist, dass die Kontaktfläche eine symmetrisch zur Rotationsachse verlaufende, konvexe Krümmung aufweist. Im Idealfall ist die Krümmung kugelförmig, das heißt, sie bildet eine Teil einer Kugeloberfläche. Abweichungen von der Kugelform in Richtung der Oberfläche eines Ellipsoids oder Paraboloids sind nicht ausgeschlossen.

Desweiteren ist die Kontaktfläche mit Vertiefungen versehen. Durch die Vertiefungen können im erweichten Quarzglas eingeschlossene oder während des Umformprozesses sich bildende Gase abgeführt oder zumindest gleichmäßiger verteilt werden.

In einer bevorzugten Ausführungsform des erfindungsgemäßen Bohrkörpers weist der Bohrkopf eine kugelförmig ausgebildete Kontaktfläche auf. Die kugelförmige Kontaktfläche bleibt bei Auslenkung des Bohrkopfes aus der Rotationsachse unabhängig von der Richtung der Auslenkung stets vollflächig im Eingriff mit der erweichten Quarzglasmasse, so dass stets rotationssymmetrisch gleich große Reibungskräfte am Umfang des Bohrkopfes wirken und das in der Innenbohrung verdrängte Quarzglas an der Randzone der Kugel glatt abgeformt wird.

Vorzugsweise verlaufen die Vertiefungen konzentrisch zur Rotationsachse. Derartige ausgebildete Vertiefungen bieten eine Entspannungsmöglichkeit für eingeschlossene Gase und ermöglichen deren gleichmäßige Verteilung um den Umfang des Bohrkopfes. Dadurch wird vermieden, dass der Bohrkopf unter Verlust des angestrebten vollflächigen Kontakts mit der Glasmasse aufgrund von Gasblasen im erweichten Quarzglas partiell "aufschwimmt". Aufgrund der gleichmäßigen Verteilung der Gase werden die um den Umfang des Bohrkopfes gleichmäßig verteilten Haftreibungskräfte aufrechterhalten, so dass die Geradheit der Bohrung und die Maßhaltigkeit des Bohrungsdurchmessers gewährleistet wird.

In einer besonders bevorzugten Ausführungsform des erfindungsgemäßen Bohrkörpers ist der Bohrkopf mit kugelförmiger Oberfläche und konzentrisch eingestochenen Stufen versehen. Die Anzahl der konzentrisch eingestochenen Stufen hängt vom Durchmesser der herzustellenden Innenbohrung ab und von der Menge der sich während der Umformung bildenden Gase.

Es hat sich bewährt, einen Bohrkopf mit mindestens einem Kühlkanal zu versehen. Durch den Kühlkanal kann während des Umformprozesses ein Kühlmittel zur Wärmeabfuhr aus dem Bereich des Bohrkopfes geleitet werden.

Nachfolgend wird die Erfindung anhand eines Ausführungsbeispiels und einer Patentzeichnung näher erläutert. In der Zeichnung zeigen in schematischer Darstellung im einzelnen:
- **Figur 1:**: einen erfindungsgemäßen Bohrkörper mit einem Kugelkopf in einer Seitenansicht, teilweise im Schnitt
- **Figur 2:**: eine Vorrichtung zur Durchführung des erfindungsgemäßen Verfahrens unter Einsatz des in Figur 1 dargestellten Bohrkopfes.

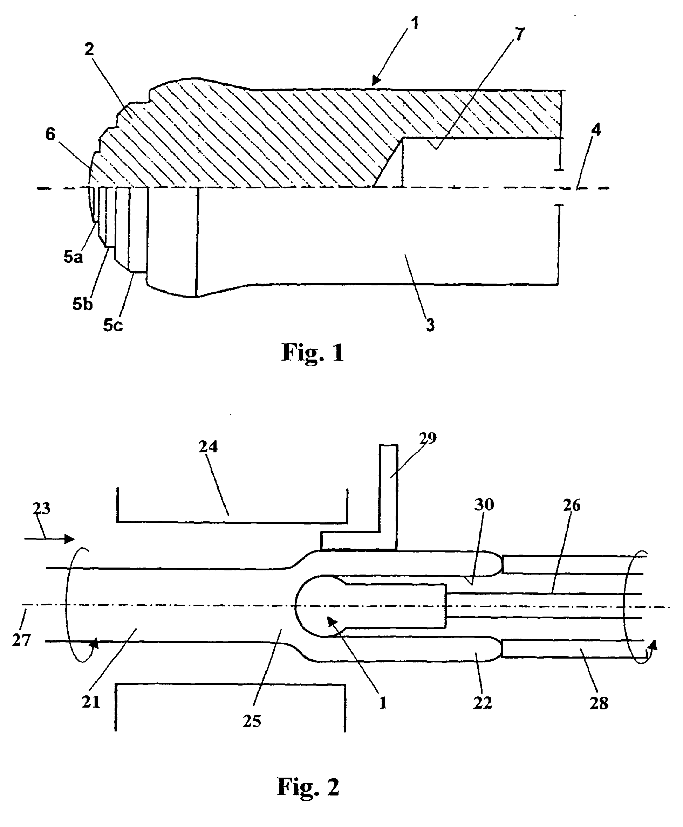

In **Figur 1** ist die Bezugsziffer 1 insgesamt einem Bohrkopf aus Graphit zugeordnet. Der Bohrkopf 1 ist im wesentlichen zylinderförmig mit einer Kontaktfläche in Form einer Halbkugel 2 ausgebildet. Der Durchmesser der Halbkugel 2 beträgt 60 mm und ist damit etwas grösser als der Durchmesser im zylinderförmigen Bereich 3, der 55 mm beträgt. Die Halbkugel 2 und der zylinderförmige Bereich 3 sind aus einem Stück gefertigt. Die Halbkugel 2 ist mit drei konzentrisch zur Längsachse 4 gestochenen Stufen 5a, 5b, 5c versehen. Die Stufenhöhen - in Richtung der Längsachse 4 gesehen - betragen in der Reihenfolge 5a, 5b, 5c 1,6 mm, 2,8 mm, 5,5 mm. Die Stufenbreite - in Richtung quer zur Längsachse 4 gesehen - beträgt jeweils 3,5 mm. Der vordere, stufenfreie Teil 6 der Halbkugel 2 hat einen Durchmesser von 20 mm.

Zur Befestigung des Bohrkopfes 1 auf einem Bohrschaft (in der Figur nicht dargestellt) ist im zylinderförmigen Bereich 3 ein Innengewinde 7 vorgesehen.

In **Figur 2** ist eine Vorrichtung zum Umformen eines Vollzylinders 21 in einen Hohlzylinder 22 schematisch dargestellt. Der Vollzylinder 21 weist einen Außendurchmesser von 90 mm auf, der daraus umgeformte Hohlzylinder 22 weist einen Außendurchmesser von 120 mm und einen Innendurchmesser von 60 mm auf.

Der Vollzylinder 21 wird kontinuierlich, um seine Längsachse rotierend, in Richtung des Pfeils 23 in einen Widerstandsofen 24 geschoben, der den Vollzylinder 21 ringförmig umgibt. Im Widerstandsofen wird der Vollzylinder 21 auf eine Temperatur von ca. 2.100°C erhitzt, so dass dieser in einem Erweichungsbereich 25 eine so geringe Viskosität aufweist, dass er zu dem Vollzylinder 22 umgeformt werden kann. Hierzu wird der in Figur 1 näher erläuterte Bohrkopf 1 eingesetzt, indem der Vollzylinder 21 im erweichten Bereich über den Bohrkopf 1 gezogen wird. Dieser wird an einem langen Bohrerschaft 26 gehalten, so dass dessen Längsachse in der Rotationsachse 27 verläuft. Für den Abzug des Hohlzylinder 22 über den Bohrkopf 1 ist an dessen Stirnseite eine um die Rotationsachse 27 rotierende Rohrpfeife 28 angesetzt. Zur Formung des Aussendurchmessers ist ein zusätzliches Formwerkzeug 29 vorgesehen.

Aufgrund der halbkugelförmigen Form des Bohrkopfes 1 wird unabhängig von einer Ablenkung des Bohrkopfes 1 gewährleistet, dass die Haftreibung zwischen dem Bohrkopf 1 und dem rotierenden Quarzglas im erweichten Bereich 25 stets um den Umfang des Bohrkopfes 1 gleichmäßig verteilt ist. Dadurch wird eine weitere seitliche Auslenkung vermieden, Oberflächendefekte in der Innenbohrung 30 minimiert, eine Abweichung vom geraden Bohrungsverlauf verhindert, und die Maßhaltigkeit des Durchmessers über die gesamte Länge der Innenbohrung 30 verbessert. Dadurch, dass der Bohrkopf 1 stets vollflächig im Erweichungsbereich 25 anliegt und das an der Halbkugel des Bohrkopfes 1 verdrängte Quarzglas der Randzone der Halbkugel glatt abgeformt wird, werden Rillen in der Innenbohrung 30 vermieden. Die konzentrisch eingestochenen Stufen in der Halbkugel-Oberfläche erlauben eine Entspannung und gleichmäßige Verteilung von im Quarzglas eingeschlossenen oder sich während des Umformprozesses bildenden Gasen. Der Bohrkopf schwimmt daher nicht partiell auf, so dass die am Umfang gleichmäßig eingreifenden Haftreibungskräfte erhalten bleiben und Geradheit und Maßhaltigkeit der Innenbohrung 30 gewährleistet werden.

## Patentansprüche

1. Verfahren für die Herstellung eines Quarzglasrohres (22), indem ein um eine Rotationsachse (27) rotierender Zylinder (21) aus Quarzglas kontinuierlich einer Heizzone (24) zugeführt, darin von einem Ende beginnend bereichsweise erweicht und der erweichte Bereich (25) über einen Bohrkopf (1) eines koaxial zur Rotationsachse (27) angeordneten Bohrkörpers abgezogen und dabei zu dem Quarzglasrohr (22) umgeformt wird, **dadurch gekennzeichnet, dass** ein Bohrkörper mit einem Bohrkopf (1) eingesetzt wird, der eine dem Zylinder (21) zugewandte und mit Vertiefungen (5a, 5b, 5c) versehene Kontaktfläche (2) mit symmetrisch zur Rotationsachse (27) verlaufender konvexer Krümmung aufweist.

2. Verfahren nach Anspruch 1, **dadurch gekennzeichnet, dass** ein Bohrkopf (1) mit kugelförmig ausgebildeter Kontaktfläche (2) eingesetzt wird.

3. Verfahren nach Anspruch 1 oder 2, **dadurch gekennzeichnet, dass** die Vertiefungen (5a, 5b, 5c) konzentrisch zur Rotationsachse (27) verlaufen.

4. Bohrkörper zum Umformen eines um eine Rotationsachse (27) rotierbaren Zylinders (21) aus Quarzglas in ein Quarzglasrohr (22), mit Bohrkopf (1), der von einem Bohrerschaft (26) gehalten wird, **dadurch gekennzeichnet, dass** der Bohrkopf (1) eine mit Vertiefungen (5a, 5b, 5c) versehene Kontaktfläche (2) mit symmetrisch zur Rotationsachse (27) verlaufender konvexer Krümmung aufweist.

5. Bohrkörper nach Anspruch 4, **dadurch gekennzeichnet, dass** der Bohrkopf (1) eine kugelförmig ausgebildete Kontaktfläche (2) aufweist.

6. Bohrkörper nach Anspruch 5, **dadurch gekennzeichnet, dass** der Bohrkopf (1) mit konzentrisch eingestochenen Stufen (5a, 5b, 5c) versehen ist.

7. Bohrkörper nach Anspruch 4, **dadurch gekennzeichnet, dass** die Vertiefungen (5a, 5b, 5c) konzentrisch zur Rotationsachse (27) verlaufen.

8. Bohrkörper nach einem der Ansprüche 4 bis 7, **dadurch gekennzeichnet, dass** im Bohrkopf (1) mindestens ein Kühlkanal ausgebildet ist.

## Claims

1. A method of producing a quartz glass tube (22) by feeding a cylinder (21) of quartz glass rotating about a rotational axis (27) continuously to a heating zone (24), softening said cylinder therein from one end and portion by portion, and drawing the softened portion (25) over a drill head (1) of a drill body arranged to be coaxial to said rotational axis (27), thereby forming said portion into said quartz glass tube (22), **characterized in that** a drill body is used with a drill head (1) having a contact surface (2) facing said cylinder (21) and being of a convex curvature extending symmetrically to the rotational axis (27), said contact surface (2) is provided with recesses (5a, 5b, 5c).

2. The method according to claim 1, **characterized in that** a drill head (1) is used with a spherically formed contact surface (2).

3. The method according to claim 1 or 2, **characterized in that** said recesses (5a, 5b, 5c) extend concentrically relative to said rotational axis (27).

4. A drill body for forming a cylinder (21) of quartz glass into a quartz glass tube (22), said cylinder (21) of quartz glass being rotatable about a rotational axis (27), said drill body comprising a drill head (1) which is held by a drill shaft (26), **characterized in that** said drill head (1) has a contact surface (2) provided with recesses (5a, 5b, 5c) and being of a convex curvature and extending symmetrically to the rotational axis (27).

5. The drill body according to claim 4, **characterized in that** said drill head (1) has a spherically formed contact surface (2).

6. The drill body according to claim 5, **characterized in that** said drill head (1) is provided with concentrically recessed steps (5a, 5b, 5c).

7. The drill body according to claim 4, **characterized in that** said recesses (5a, 5b, 5c) are disposed so as to extend concentrically relative to said rotational axis (27).

8. The drill body according to any one of the claims 4 to 7, **characterized in that** said drill head (1) is formed with at least one cooling channel.

## Revendications

1. Procédé pour la fabrication d'un tube en verre de quartz (22), dans le fait qu'un cylindre (21) tournant autour d'un axe de rotation (27) en verre de quart est alimenté en continu à une zone de chauffage (24), y est ramollie par zone en commençant par une extrémité et la zone ramollie (25) est retirée par une tête d'alésage (1) d'un corps d'alésage disposé coaxialement à l'axe de rotation (27) et est transformée en tube de verre de quartz (22) **caractérisé en ce qu'**un corps d'alésage est inséré avec une tête d'alésage (1) qui présente une surface de contact (2) munie de cavités (5a, 5b, 5c) et tournée vers le cylindre (21), avec une courbure convexe s'étendant de manière symétrique par rapport à l'axe de rotation (27).

2. Procédé selon la revendication 1, **caractérisé en ce qu'**une tête d'alésage (1) avec une surface de contact sphérique (2) est utilisée.

3. Procédé selon la revendication 1 ou 2, **caractérisé en ce que** les cavités (5a, 5b, 5c) s'étendent concentriquement à l'axe de rotation (27).

4. Corps d'alésage pour la transformation d'un cylindre (21) rotatif autour d'un axe de rotation (27) en verre de quartz en un tube de verre de quartz (22) avec une tête d'alésage (1) qui est maintenue par une tige d'alésage (26) **caractérisé en ce que** la tête d'alésage (1) présente une surface de contact (2) munie de cavités (5a, 5b, 5c) avec une courbure convexe s'étendant symétriquement à l'axe de rotation (27).

5. Corps d'alésage selon la revendication 4, **caractérisé en ce que** la tête d'alésage (1) présente une surface de contact (2) sphérique.

6. Corps d'alésage selon la revendication 5, **caractérisé en ce que** la tête d'alésage (1) est munie de paliers (5a, 5b, 5c) ménagés concentriquement.

7. Corps d'alésage selon la revendication 4, **caractérisé en ce que** les cavités (5a, 5b, 5c) s'étendent concentriquement à l'axe de rotation (27).

8. Corps d'alésage selon l'une des revendications 4 à 7, **caractérisé en ce qu'**il est ménagé dans la tête d'alésage (1) au moins un canal de refroidissement.
